(19) **Europäisches Patentamt**
**European Patent Office**
**Office européen des brevets**

(11) **EP 3 564 624 A1**

(12) **EUROPEAN PATENT APPLICATION**
published in accordance with Art. 153(4) EPC

(43) Date of publication:
06.11.2019 Bulletin 2019/45

(21) Application number: 18741121.0

(22) Date of filing: 18.01.2018

(51) Int Cl.:
*G01C 21/34* (2006.01)     *G01C 21/36* (2006.01)

(86) International application number:
PCT/CN2018/073114

(87) International publication number:
WO 2018/133805 (26.07.2018 Gazette 2018/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 18.01.2017 CN 201710034754

(71) Applicant: Huawei Technologies Co., Ltd.
Longgang District
Shenzhen, Guangdong 518129 (CN)

(72) Inventors:
• BAO, Dinghua
  Shenzhen, Guangdong 518129 (CN)
• ZHANG, Zhijun
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **PATH PLANNING METHOD AND DEVICE**

(57) Embodiments of the present invention provide a path planning method and apparatus, to implement better path planning. The method includes: obtaining, based on a pass-through distance of each of a plurality of first areas and a representation value of an environment characteristic of each first area, a pass-through cost for passing through each first area; obtaining a start location and a target location; and performing path planning based on the pass-through cost for passing through each first area, to determine a pass-through path from the start location to the target location, where the pass-through path includes an area passed through from the start location to the target location.

200

| Obtain, based on a pass-through distance of each of a plurality of first areas and a representation value of an environment characteristic of each first area, a pass-through cost for passing through each first area | 210 |

| Obtain a start location and a target location | 220 |

| Perform path planning based on the pass-through cost for passing through each first area, to determine a pass-through path from the start location to the target location, where the pass-through path includes an area passed through from the start location to the target location | 220 |

FIG. 2

EP 3 564 624 A1

## Description

This application claims priority to Chinese Patent Application No. 201710034754.2, filed with the Chinese Patent Office on January 18, 2017 and entitled "PATH PLANNING METHOD AND APPARATUS", which is incorporated herein by reference in its entirety.

## TECHNICAL FIELD

Embodiments of the present invention relate to the field of intelligent control, and more specifically, to a path planning method and apparatus.

## BACKGROUND

Path planning is an important branch in the field of intelligent control researches. Using a good path planning technology can reduce an operating time of an intelligent execution apparatus (for example, a robot), improve task execution efficiency, and improve task execution quality.

A map may be used to implement path planning. In the prior art, a map includes location information and obstacle information, so that an intelligent execution apparatus can find, based on the map, a path that can bypass an obstacle.

However, only the location information and the obstacle information are considered in existing path planning, and other factors are not considered. Consequently, application of path planning is limited.

## SUMMARY

Embodiments of the present invention provide a path planning method and device, to implement better path planning.

According to a first aspect, a path planning method is provided. The method includes: obtaining, based on a pass-through distance of each of a plurality of first areas and a representation value of an environment characteristic of each first area, a pass-through cost for passing through each first area; obtaining a start location and a target location; and performing path planning based on the pass-through cost for passing through each first area, to determine a pass-through path from the start location to the target location, where the pass-through path includes an area passed through from the start location to the target location.

Therefore, the pass-through cost for passing through each first area is obtained based on the pass-through distance of each of the plurality of first areas and the representation value of the environment characteristic of each first area, and path planning is performed based on the pass-through cost. In this way, when path planning is performed, not only a pass-through distance of an area but also a representation value of an environment characteristic of the area can be considered, to implement better path planning. Further, the pass-through distance and the representation value are quantized into a pass-through cost, so that when an intelligent execution apparatus performs path planning, a pass-through path is obtained based on the pass-through cost, to reduce an operating time of the intelligent execution apparatus, and improve task execution efficiency.

Optionally, the pass-through path may be a path with a minimum pass-through cost.

Optionally, the method further includes: generating an environment map based on the pass-through cost for passing through each first area, where the environment map includes the pass-through cost for passing through each first area, and is used to mark the representation value of each first area within a coverage area of the plurality of first areas; and the performing path planning based on the pass-through cost for passing through each first area, to determine a pass-through path from the start location to the target location includes: based on the environment map, determining the pass-through path based on the pass-through cost for passing through each area within the coverage area of the plurality of areas.

Therefore, the pass-through cost in each first area is obtained based on the pass-through distance of each of the plurality of first areas and the representation value of the environment characteristic of each first area, and the environment map on which a pass-through cost of each area is marked is generated, so that a better map can be obtained.

Optionally, the environment map may be a pass-through cost list or a global pass-through cost topology view.

Optionally, the obtaining, based on a pass-through distance of each of a plurality of first areas and a representation value of an environment characteristic of each first area, a pass-through cost for passing through each first area includes: determining, based on the pass-through distance of each first area, a first pass-through cost component corresponding to the pass-through distance of each first area; determining, based on the representation value of the environment characteristic of each first area, a second pass-through cost component corresponding to the representation value of the environment characteristic of each first area; and calculating, based on the first pass-through cost component and the second pass-through cost component of each first area, the pass-through cost for passing through each first area.

Therefore, for each task type, a pass-through cost of the task type in each area is calculated. In this way, when path planning of a task type is performed, a pass-through cost of each area for the task type can be directly obtained, to implement more optimized path planning.

Optionally, the method further includes: obtaining at least one task type to be executed when the pass-through path is passed through; the obtaining, based on the representation value of the environment characteristic of each first area, a second pass-through cost component corresponding to the pass-through distance of each first area includes: obtaining, based on a representation value of at least one type of available environment characteristic of each of the at least one task type in each first area, a second pass-through cost component corresponding to each task type at each first area; the calculating, based on the first pass-through cost component and the second pass-through cost component of each first area, the pass-through cost for passing through each first area includes: calculating, based on the first pass-through cost component of each first area and the second pass-through cost component corresponding to each task type in each first area, a pass-through cost for passing through each first area when each task type is executed; and the performing path planning based on the pass-through cost for passing through each first area includes: determining, based on the pass-through cost for passing through each first area when each task type is executed, the pass-through path used for executing each task type.

Optionally, the at least one task type includes a first task type, and the obtaining the second pass-through cost component corresponding to each task type in each first area includes: determining, based on a representation value of at least one type of environment characteristic whose representation value meets a predetermined condition and that is in an available environment characteristic of the first task type in each first area, a second pass-through cost component corresponding to the first task type in each first area.

Optionally, the first area is an area that meets the following condition: the representation value of an available environment characteristic of the first task type in the first area meets an environment characteristic requirement of the first task type.

Optionally, the method further includes: determining at least one second area, where the representation value of the available environment characteristic of the first task type in the second area does not meet the environment characteristic requirement of the first task type; and when path planning is performed, considering each of the at least one second area as an obstacle.

Optionally, the method further includes: obtaining a plurality of task types to be executed when the pass-through path is passed through; the obtaining, based on the representation value of the environment characteristic of each first area, a second pass-through cost component corresponding to the representation value of the environment characteristic of each first area includes: obtaining, based on a representation value of at least one type of available environment characteristic of each of the plurality of task types, a second pass-through cost component corresponding to a whole of the plurality of task types in each first area; the calculating, based on the first pass-through cost component and the second pass-through cost component of each first area, the pass-through cost for passing through each first area includes: calculating, based on the first pass-through cost component of each first area and the second pass-through cost component corresponding to the whole of the plurality of task types in each first area, a pass-through cost corresponding to the whole of the plurality of task types in each first area; and the performing path planning based on the pass-through cost for passing through each first area includes: determining, based on the pass-through cost corresponding to the whole of the plurality of task types in each first area, the pass-through path used for executing the plurality of task types.

Therefore, the plurality of task types may be considered as a whole, and the pass-through cost of the whole of the plurality of task types in each area is obtained. In this way, when path planning required for executing the plurality of task types is performed, a pass-through cost of the whole of the plurality of task types in each area can be directly obtained, to reduce a processing time of the intelligent execution apparatus, and improve processing efficiency.

Optionally, the obtaining a second pass-through cost component corresponding to a whole of the plurality of task types in each first area includes: obtaining, based on a representation value of at least one type of available environment characteristic of each of the plurality of task types in each first area, a second pass-through cost component corresponding to each task type in each first area; and performing weighted processing on a plurality of second pass-through cost components corresponding to the plurality of task types in each first area, to obtain the second pass-through cost component corresponding to the whole of the plurality of task types in the first area.

Optionally, the first area is an area that meets the following condition: the representation value of the available environment characteristic of each of the plurality of task types in the first area meets an environment characteristic requirement of each task type.

Optionally, the method further includes: determining at least one third area, where a representation value of an environment characteristic corresponding to at least one of the plurality of task types in the third area does not meet a representation value requirement of the at least one task type; and when path planning is performed, considering each of the at least one third area as an obstacle.

Optionally, the determining, based on the representation value of the environment characteristic of each first area, a second pass-through cost component corresponding to the representation value of the environment characteristic of each first area includes: determining, based on a representation value of an environment characteristic of each area and a correspondence between a representation value interval of an environment characteristic and a pass-through cost component, the second pass-through cost component in each first area.

Optionally, the obtaining, based on a pass-through distance of each of a plurality of first areas and a representation value of an environment characteristic of each first area, a pass-through cost for passing through each first area includes: obtaining, in a statistical manner based on the pass-through distance of each first area and representation values that are of an environment characteristic of each first area and that are obtained at a plurality of times, the pass-through cost for passing through each first area; or obtaining, in real time based on the pass-through distance of each first area and a real-time representation value of an environment characteristic of each first area, the pass-through cost for passing through each first area; or obtaining, based on the pass-through distance of each first area and a predicted representation value of an environment characteristic of each first area, the pass-through cost for passing through each first area.

Optionally, the obtaining, in a statistical manner based on the pass-through distance of each first area and representation values that are of an environment characteristic of each first area and that are obtained at a plurality of times, the pass-through cost for passing through each first area includes: when a change rate of a representation value of an environment characteristic of each first area is less than or equal to a first threshold, obtaining, in a statistical manner based on the pass-through distance of each first area and the representation values that are of the environment characteristic of each first area and that are obtained at a plurality of times, the pass-through cost for passing through each first area.

Optionally, the obtaining, in real time based on the pass-through distance of each first area and a real-time representation value of an environment characteristic of each first area, the pass-through cost for passing through each first area includes: when a change rate of a representation value of an environment characteristic of each first area is greater than a second threshold, obtaining, in real time based on the pass-through distance of each first area and the real-time representation value of the environment characteristic of each first area, the pass-through cost for passing through each first area.

Optionally, the environment characteristic includes a visual signal; the determining, based on the representation value of the environment characteristic of each first area, a second pass-through cost component corresponding to the representation value of the environment characteristic of each first area includes: obtaining, based on a representation value of a visual signal that passes through each first area and that is in each of the plurality of directions, a second pass-through cost component corresponding to each direction at each first area; and the calculating, based on the first pass-through cost component and the second pass-through cost component of each first area, the pass-through cost for passing through each first area includes: determining, based on the first pass-through cost component of each first area and the second pass-through cost component corresponding to each direction in each first area, a pass-through cost for passing through each first area in each direction.

Optionally, the environment characteristic includes at least one of a visual signal, a sound signal, and a contact surface status.

Optionally, the environment characteristic includes a visual signal, and a representation value of the visual signal includes light intensity and/or a quantity of visible characteristics.

Optionally, the environment characteristic includes a sound signal, and a representation value of the sound signal includes strength of the sound signal.

Optionally, the environment characteristic includes a contact surface status, and a representation value of the contact surface status includes an inclination degree, a height change rate, and/or a friction degree of a contact surface of the location.

According to a second aspect, a path planning apparatus is provided. The path planning apparatus may include a unit configured to perform the method in the first aspect or any one of the optional implementations of the first aspect.

According to a third aspect, a path planning apparatus is provided. The path planning apparatus may include a memory and a processor. The memory may store program code, the processor communicates with the memory by using an internal connection path, and the processor may invoke the program code stored in the memory, to perform the method in the first aspect or any one of the optional implementations of the first aspect.

According to a fourth aspect, a storage medium is provided. The storage medium may store program code, and a processor may invoke the program code stored in the storage medium, to perform the method in the first aspect or any one of the optional implementations of the first aspect.

## BRIEF DESCRIPTION OF DRAWINGS

FIG. 1 is a schematic diagram of a path planning system according to an embodiment of the present invention;
FIG. 2 is a schematic flowchart of a path planning method according to an embodiment of the present invention;
FIG. 3 is a schematic diagram of performing path planning based on a pass-through cost according to an embodiment of the present invention;
FIG. 4 is a schematic diagram of performing path planning based on a pass-through cost according to an embodiment of the present invention;
FIG. 5 is a schematic diagram of performing path planning based on a pass-through cost according to an embodiment of the present invention;
FIG. 6 is a schematic diagram of performing path planning based on a pass-through cost according to an embodiment of the present invention;

FIG. 7 is a schematic diagram of performing path planning based on a pass-through cost according to an embodiment of the present invention;

FIG. 8 is a schematic flowchart of a map generation method according to an embodiment of the present invention;

FIG. 9 is a schematic flowchart of a path planning method according to an embodiment of the present invention;

FIG. 10 is a schematic block diagram of a path planning apparatus according to an embodiment of the present invention;

FIG. 11 is a schematic block diagram of a map generation device according to an embodiment of the present invention;

FIG. 12 is a schematic block diagram of a path planning apparatus according to an embodiment of the present invention; and

FIG. 13 is a schematic block diagram of a processing device according to an embodiment of the present invention.

## DESCRIPTION OF EMBODIMENTS

The following describes the technical solutions in the embodiments of the present invention with reference to the accompanying drawings in the embodiments of the present invention.

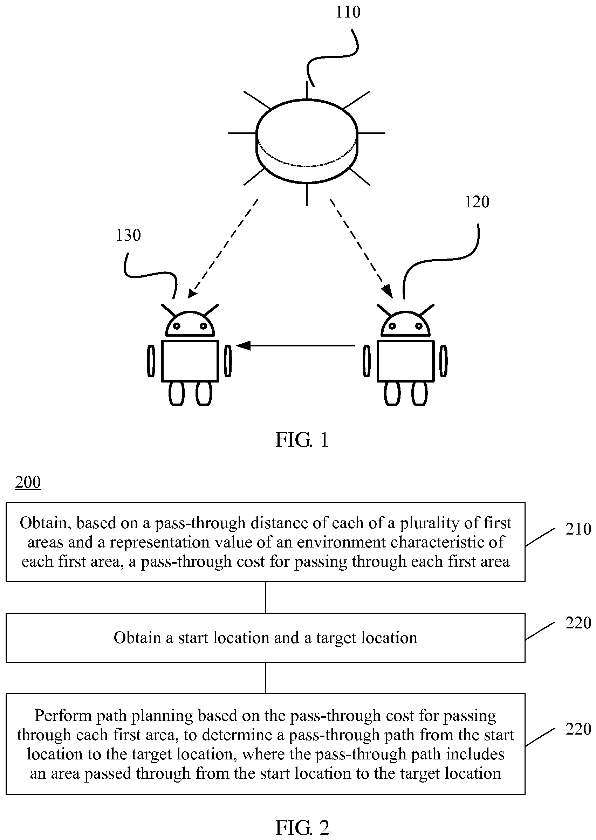

FIG. 1 is a schematic diagram of a path planning system according to an embodiment of the present invention. As shown in FIG. 1, the system may include an environment system 110 and an intelligent execution apparatus 120.

The environment system 110 may generate an environment characteristic, and the environment characteristic may include at least one of a visual signal, a sound signal, and a contact surface status. Certainly, the environment characteristic may further include another characteristic, which is not specifically limited herein.

The intelligent execution apparatus 120 may perform path planning based on a representation value of the environment characteristic generated by the environment system 110.

Specifically, the intelligent execution apparatus 120 may generate an environment map based on the representation value of the environment characteristic, and perform path planning based on the environment map.

Optionally, the system may further include an intelligent execution apparatus 130.

The intelligent execution apparatus 120 may further send the generated environment map to the intelligent execution apparatus 130. The intelligent execution apparatus 130 may perform path planning based on the environment map sent by the intelligent execution apparatus 120.

It should be understood that the intelligent execution apparatus described in this embodiment of the present invention may be a machining apparatus that automatically works, for example, may be a robot, a self-driving vehicle, or an unmanned aerial vehicle. Although the intelligent execution apparatuses 120 and 130 shown in FIG. 1 are robots, they are merely examples described for ease of understanding, and are not intended to limit the scope of the present invention. Similarly, an illustration manner of the environment system 110 shall not constitute any limitation on the scope of the embodiments of the present invention.

When path planning is performed, a candidate area may be divided into a plurality of areas, and a pass-through cost for passing through an area is marked in all or some areas. If a pass-through cost is high, a cost for passing through the area is high, and a probability that the area is selected is small when path planning is performed.

Optionally, a pass-through cost may be a value, and unitless values corresponding to all areas may be obtained for all the areas based on a same criterion.

The following describes in detail how to obtain pass-through costs for passing through a plurality of areas and generate an environment map based on the pass-through costs of the plurality of areas, and describes how to perform path planning based on the pass-through costs of the plurality of areas.

FIG. 2 is a schematic flowchart of a path planning method 200 according to an embodiment of the present invention. The method 200 may be applied to the system shown in FIG. 1. The method may be optionally executed by the intelligent execution apparatus 120 shown in FIG. 1. It should be understood that the method 200 may be executed by another device. An intelligent execution apparatus is used merely as an example for description in this embodiment of the present invention.

As shown in FIG. 2, the method 200 includes the following content.

210. Obtain, based on a pass-through distance of each of a plurality of first areas and a representation value of an environment characteristic of each first area, a pass-through cost for passing through each first area.

Optionally, the intelligent execution apparatus may directly detect a representation value of an environment characteristic of each area, or may receive a representation value that is of an environment characteristic and that is sent by another device, or may receive a manually-input representation value of an environment characteristic.

Optionally, when directly detecting the representation value of the environment characteristic of each area, the intelligent execution apparatus may traverse all areas, to obtain the representation value of the environment characteristic for calculating a pass-through cost.

Optionally, the area described in this embodiment of the present invention may be referred to as a node, and the area may be a square structure, or may be a rectangle, a hexagon, or any other shape.

Optionally, pass-through distances of all areas in a map may be the same, or may be different.

Optionally, the pass-through distance of the first area is a length between any two points in the first area. For example, area division in a grid manner is used as an example, and a length between any two points may be a side-length distance or a diagonal distance.

Optionally, the environment characteristic described in this embodiment of the present invention may include at least one of a visual signal, a sound signal, and a contact surface status.

Optionally, a representation value of the visual signal includes light intensity and/or a quantity of visible characteristics.

Optionally, the visual signal may be used for positioning, for example, for positioning by using a visible characteristic. Therefore, if a quantity of visible characteristics is large, positioning is easier. When positioning is performed, the light intensity may also affect positioning, for example, when the light intensity meets a visual requirement of an intelligent execution device, positioning is easier.

Optionally, the environment characteristic includes a sound signal, and a representation value of the sound signal includes strength of the sound signal.

Optionally, sound signals may be classified into noise and a beneficial sound signal, and the beneficial sound signal may include an ultrasonic signal, and positioning may be performed by using the signal.

For example, intensity of noise in each area may be recorded, and if intensity of noise at a location is small or there is no noise, the location is more easily passed through.

For another example, when communication or positioning is performed by using a sound, if strength of a sound signal in an area is high, it is considered that the area is more easily passed through.

Optionally, a representation value of the contact surface status includes an inclination degree, a height change rate, and/or a friction degree of a contact surface of the location.

For example, it is assumed that the contact surface is a road surface, and a representation value of the road surface may be a pass-through difficulty degree or a bumpy degree, whether the road surface is muddy, a slippery status, or an inclination angle of the road surface.

The contact surface status may be manually obtained, or contact surface statuses at different locations may be identified through detection performed by a device.

For example, a score may be manually provided based on a road surface status. For example, a road surface with water is scored 0 points, a muddy road surface is scored 10 points, a road surface with an inclination angle greater than 5 degrees is scored 0 points, a road surface with a slippery degree or bumpy degree exceeding a threshold is scored 10 points, and another case is scored 100 points. A pass-through cost is determined based on a score, for example, a higher score indicates a lower pass-through cost.

For example, a material of the road surface may be estimated by using a visual identification method. If there is a visually identifiable object, such as a wire, a threshold, or a stairway, a representation value may be obtained by quantizing the object. The slippery degree may be estimated by using a plurality of positioning manners and a method of robot odometry information comparison. The pass-through difficulty degree of a corresponding road segment may be estimated by recording an output power of a motor. The inclination angle of the road surface may be obtained through calculation by using a sensor such as a gravity meter or a camera built in a robot.

It should be understood that the first area described in this embodiment of the present invention may be any area in the candidate area, or may be an area that meets a specific condition, for example, an area whose representation value of an environment characteristic meets a specific condition, and a pass-through cost may be calculated for the area. However, an area that does not meet a condition may be directly considered as an obstacle.

It should be understood that in this embodiment of the present invention, the pass-through cost for passing through the first area sometimes may be referred to as a pass-through cost of the first area or a pass-through cost in the first area.

Optionally, in this embodiment of the present invention, the intelligent execution apparatus may generate an environment map based on the pass-through cost for passing through each first area, where the environment map includes the pass-through cost for passing through each first area, and is used to mark the representation value of each first area within a coverage area of the plurality of first areas, and the environment map may be used for performing path planning.

Optionally, the environment map may be a pass-through cost list or a global pass-through cost topology view.

It should be understood that in this embodiment of the present invention, the environment map may mark a representation value of an environment characteristic, but it does not mean that a pass-through cost of each area in the map is related only to the representation value of the environment characteristic. The pass-through cost of each area is further related to a pass-through distance of each area. For example, if pass-through distances are inconsistent, representation values of an environment characteristic may be different even though pass-through costs are the same.

It should be understood that in this embodiment of the present invention, the intelligent execution apparatus may further not generate a map, but directly performs path planning based on pass-through costs of a plurality of first areas.

Optionally, the intelligent execution apparatus may obtain a pass-through cost in a corresponding area in a statistical or voting manner by using representation values that are of an environment characteristic and that are obtained at a plurality of times; or may obtain in real time a pass-through cost in a corresponding area by using a real-time representation value of an environment characteristic; or may obtain a pass-through cost in a corresponding area by using a predicted representation value of an environment characteristic.

Specifically, the intelligent execution apparatus may obtain the pass-through cost in the corresponding area in the statistical or voting manner by using the representation values that are of the environment characteristic and that obtained at a plurality of times, to generate an environment map; or may obtain in real time the pass-through cost in the corresponding area by using the real-time representation value of the environment characteristic, to update an environment map in real time; or may obtain the pass-through cost in the corresponding area by using the predicted representation value of the environment characteristic, to generate an environment map.

The statistical manner is to process together the representation values that are of the environment characteristic and that are obtained at a plurality of times, for example, perform weighted processing, to obtain the pass-through cost in the corresponding area. The voting manner is to select, from the representation values that are of the environment characteristic and that are obtained at a plurality of times, representation values that are of an environment characteristic and that are obtained at some of the plurality of times, to obtain the pass-through cost in the corresponding area.

Specifically, it may be determined with reference to an actual situation to obtain the pass-through cost in the statistical or voting manner, or in real time, or in a prediction manner, or through a combination of any two of the manners.

Optionally, when stability of the representation value of the environment characteristic is relatively good, the pass-through cost in the corresponding area may be obtained in the statistical manner; or when stability of the representation value of the environment characteristic is relatively poor, the pass-through cost in the corresponding area may be obtained in real time.

For example, when the environment characteristic is a visual signal, in an outdoor environment, illumination conditions are different at different time periods, and a map may be updated according to a time period. In indoor environments (for example, during business periods of shopping malls), illumination conditions are basically the same at same time periods, and a map may be generated in a statistical manner.

The stability of the representation value of the environment characteristic may be a change rate of the environment characteristic. For example, when a change rate of strength of the environment characteristic is less than or equal to a predetermined value, or a change rate of a direction of the environment characteristic is less than or equal to a predetermined value, it is considered that stability is relatively good.

Optionally, when the environment characteristic is a predictable environment characteristic, in other words, when the representation value of the environment characteristic at another moment and/or in another area can be predicted based on the representation value of the environment characteristic at a moment and/or in an area, it can be considered that the environment characteristic is a predictable environment characteristic.

For example, when the environment characteristic is a visual signal, an illumination condition at another time period may be predicted based on an illumination condition at a time period. When the environment characteristic is a sound signal, a sound signal at another time period may be predicted based on a sound signal at a time period. When the environment signal is a road surface status, the road surface status may be predicted based on a weather forecast status.

It should be understood that there may be another implementation for the prediction manner of the representation value of the environment characteristic in this embodiment of the present invention, and details are not described herein.

It should be understood that there may be another implementation for the prediction manner of the representation value of the environment characteristic in this embodiment of the present invention, and details are not described herein.

Optionally, the environment map in this embodiment of the present invention may include a pass-through cost of each of a plurality of areas, and the pass-through cost of each area may include a plurality of pass-through costs, for example, may include predicted pass-through costs at various moments. Therefore, when path planning is performed, a corresponding path plan in an area may be obtained with reference to a pass-through cost of the area at each moment and a current moment when the apparatus moves to the area, to select a better path.

Optionally, the map in this embodiment of the present invention may include pass-through costs for a plurality of directions in each of the plurality of areas, and a pass-through cost in each direction is a pass-through cost for passing through the area in the direction. For example, when the environment characteristic is a visual signal, different directions may have different representation values. For example, a representation value for a pass-through direction away from the sun is different from a representation value for a pass-through direction towards the sun.

It is assumed that an area in the map may include eight pass-through directions respectively at 0 degrees, 45 degrees, 90 degrees, 135 degrees, 180 degrees, 225 degrees, 270 degrees, and 315 degrees, and pass-through costs may be determined based on illumination conditions collected by cameras in the eight directions of the area.

It should be understood that another quantity of pass-through costs may be determined, and may be specifically determined based on a division shape of each area, a capability of the intelligent execution device, a requirement of a to-be-executed task, and the like.

Therefore, in this embodiment of the present invention, the pass-through cost in each first area is obtained based on the pass-through distance of each of the plurality of first areas and the representation value of the environment characteristic of each first area, so that when the environment map is generated, a pass-through cost in each area can be marked in each area. Therefore, when the environment map is generated, not only a pass-through distance of an area but also a representation value of an environment characteristic of the area can be considered, and the pass-through distance and the representation value of the environment characteristic are quantized into a pass-through cost, to obtain a better environment map. In this way, the environment map is more widely applied, better path planning can be implemented, and the pass-through distance and the representation value of the environment characteristic are quantized into the pass-through cost, so that when performing path planning, a robot can obtain a pass-through path based on the pass-through cost, thereby reducing an operating time of the robot, and improving task execution efficiency.

Optionally, in this embodiment of the present invention, when the pass-through cost in the first area is obtained with reference to the pass-through distance of the first area and the representation value of the environment characteristic, a first pass-through cost component corresponding to the pass-through distance and a second pass-through cost component corresponding to the representation value of the environment characteristic may be calculated, and the pass-through cost for passing through the area may be obtained with reference to the first pass-through cost component and the second pass-through cost component.

In an implementation, the first pass-through cost component and the second pass-through cost component of the first area may be added, to obtain the pass-through cost of the first area.

In another implementation, weighted processing may be performed on the first pass-through cost component of the first area and the second pass-through cost component of the first area, to obtain the pass-through cost of the first area. A weighting coefficient may be set based on a specific case, for example, if a to-be-executed task has relatively high sensitivity to a pass-through distance of an area, a relatively high weighting coefficient may be set for a size.

In another implementation, the second pass-through cost may be a coefficient that is multiplied by the first pass-through cost component to obtain the pass-through cost, and the pass-through cost in the first area may be obtained with reference to the first pass-through cost component and the coefficient.

It should be understood that in this embodiment of the present invention, in addition to the pass-through distance of the area and the representation value of the environment characteristic, another factor may be further considered. For example, a third pass-through cost component in each area is determined based on signal quality of a wireless signal (for example, a satellite signal or a network signal). Therefore, the first pass-through cost component, the second pass-through cost component, and the third pass-through cost component may be added or weighted, to obtain a pass-through cost of the area.

Optionally, the obtained second pass-through cost component in each area may be determined based on a representation value of an environment characteristic of each area and a correspondence between a representation value interval of an environment characteristic and a pass-through cost.

For example, representation values of an environment characteristic may be graded at three levels: good, medium, and poor. Each level includes a range of values that can be quantized, and each level may be corresponding to a different second pass-through cost component. After a representation value of an environment characteristic is obtained, a level of the representation value of the environment characteristic may be determined, and a second pass-through cost component corresponding to the level may be obtained.

For example, a good representation value of an environment characteristic is corresponding to a coefficient 1, a medium representation value of an environment characteristic is corresponding to a coefficient 5, and a poor representation value of an environment characteristic is corresponding to a coefficient 10. Pass-through costs corresponding to distances of an area are 10 (for a side-length distance) and 14 (for a diagonal distance). If a representation value of an environment characteristic at the location is poor, pass-through costs of the side-length distance and the diagonal distance at the location may be determined as 100 and 140; or if a representation value of an environment characteristic at the location is medium, pass-through costs of the side-length distance and the diagonal distance at the location may be determined as 50 and 70; or if a representation value of an environment characteristic at the location is good, pass-through costs of the side-length distance and the diagonal distance at the location may be determined as 10 and 14.

It should be understood that in this embodiment of the present invention, quality of an environment characteristic represents a difficulty degree in executing a task when the environment characteristic is used. Good quality represents that a task is easy to execute, and poor quality represents that a task is difficult to execute.

Optionally, in this embodiment of the present invention, a pass-through cost may be set on the environment map for each of a plurality of types of environment characteristics with reference to the pass-through distance. When a task is executed by using the environment map, an environment characteristic usable in the task may be determined, and path planning may be performed by using a pass-through cost obtained based on the usable environment characteristic.

Optionally, in this embodiment of the present invention, a pass-through cost of each area may be obtained with reference to at least one to-be-executed task type. In addition, optionally, a pass-through cost corresponding to the task type may be marked on the environment map, and when a task is executed by using the environment map, a pass-through cost corresponding to the task may be determined, to perform path planning. The to-be-executed task includes but is not limited to at least one of positioning, communication, network connection, detection, and identification.

Optionally, the environment characteristic includes a visual signal. A second pass-through cost component corresponding to each direction in each first area is obtained based on a representation value of a visual signal that passes through each first area in each of the plurality of directions; and a pass-through cost in each first area in each direction is determined based on the first pass-through cost component of each first area and the second pass-through cost component corresponding to the representation value of the visual signal that passes through each first area in each direction.

Optionally, in this embodiment of the present invention, a pass-through cost of each area may be obtained with reference to the at least one to-be-executed task type on the map. When the task is executed by using the map, the pass-through cost corresponding to the task may be determined, to perform path planning. The to-be-executed task on the map includes but is not limited to at least one of positioning, communication, network connection, detection, and identification.

Optionally, a wireless pass-through cost is determined with reference to a requirement of a task type for a representation value of an environment characteristic and a representation value of an environment characteristic. For example, if an environment characteristic a is used in both a task type A and a task type B, and a requirement of the task type A for an environment characteristic is higher than a requirement of the task type B for an environment characteristic, with a same representation value, a pass-through cost component corresponding to the task type A is greater than a pass-through cost component corresponding to the task type B.

With reference to a manner A and a manner B, the following describes how to obtain a pass-through cost in each area with reference to a to-be-executed task type when an environment map is generated.

Manner A:

At least one to-be-executed task type is obtained; a second pass-through cost component of each task type in each first area is obtained based on a representation value of at least one type of available environment characteristic of each of the at least one task type in each first area; and a pass-through cost of each task type in each first area is calculated based on the first pass-through cost component of each first area and the second pass-through cost component of each task type in each first area.

Optionally, the environment map may be generated based on the pass-through cost of each task type in each first area, and the environment map includes the pass-through cost of each task type in each first area.

In other words, for each task type, a pass-through cost of the task type in each area is calculated. In this way, when path planning of a task type is performed, a pass-through cost of each area for the task type may be directly obtained, to implement better path planning.

When a second pass-through cost component of each task type in an area is calculated, a pass-through cost may be determined with reference to a requirement of a task type for a representation value of an environment characteristic and a representation value of an environment characteristic.

Optionally, the at least one task type includes a first task type, and a second pass-through cost component of the first task type in each first area is determined based on a representation value of at least one type of environment characteristic whose representation value meets a predetermined condition and that is in an available environment characteristic of the first task type in each first area.

Optionally, the at least one type of environment characteristic that meets the predetermined condition may be an environment characteristic whose representation value is greater than a specific threshold, or may be an environment characteristic with an optimal representation value.

Specifically, if there are a plurality of types of available environment characteristics for a task, an environment characteristic with relatively good quality may be selected when the intelligent execution apparatus moves to the area and executes the to-be-executed task. Therefore, a pass-through cost component can be calculated by using the environment characteristic with relatively good quality. For example, when a task is to perform positioning, if the positioning may be performed in an area by using a quantity of visible characteristics and a sound signal, positioning precision in the two manners may be estimated, and higher positioning precision may be determined as a parameter used for determining a pass-through cost in the area.

Certainly, for the first task type, if there are a plurality of types of available environment characteristics in an area, the second pass-through cost component may be calculated with reference to representation values of the plurality of types of environment characteristics, for example, weighted processing may be performed on the representation values of the plurality of types of environment characteristics, and the representation value obtained through the weighted processing may be used for calculating the second pass-through cost component. Alternatively, the second pass-through cost components are separately calculated based on the representation values of the plurality of types of environment characteristics, and weighted processing is performed on the obtained plurality of second pass-through cost components, to obtain a final available second pass-through cost component. Certainly, in addition to weighted processing, another processing manner may be used, which may be specifically determined based on an actual situation. For example, if there are a plurality of types of environment characteristics, the plurality of types of environment characteristics may be used together, processing similar to addition processing may be performed on representation values of the plurality of types of environment characteristics, and the second pass-through cost component may be further obtained through calculation.

Optionally, the first area may be any area included in the candidate area, or may be an area that meets the following condition: the representation value of an available environment characteristic of the first task type in each first area meets an environment characteristic requirement of the first task type.

Optionally, at least one second area is determined, and the representation value of the available environment characteristic of the first task type in the second area does not meet the environment characteristic requirement of the first task type; and when path planning is performed, the second area may be considered as an obstacle.

Optionally, each of the at least one second area is marked as an obstacle on the environment map for the first task type.

Manner B:

A plurality of to-be-executed task types are obtained; a second pass-through cost component of a whole of the plurality of task types in each first area is obtained based on a representation value of at least one type of available environment characteristic of each of the plurality of task types; and a pass-through cost of the whole of the plurality of task types in each first area is calculated based on the first pass-through cost component of each first area and the second pass-through cost component of the whole of the plurality of task types in each first area.

Optionally, the environment map may be generated based on the pass-through cost of the whole of the plurality of task types in each first area, and the environment map includes the pass-through cost of the whole of the plurality of task types in each first area.

In other words, the plurality of task types may be considered as a whole, and the pass-through cost of the whole of the plurality of task types in each area may be obtained. In this way, when path planning required for executing the plurality of task types is performed, a pass-through cost of the whole of the plurality of task types in each area may be directly obtained, to implement better path planning.

Optionally, a second pass-through cost component of each task type in each first area is obtained based on a representation value of at least one type of available environment characteristic of each of the plurality of task types in each first area; and weighted processing is performed on a plurality of second pass-through cost components of the plurality of task types in each first area, to obtain the second pass-through cost component of the whole of the plurality of task types in the first area.

In addition to weighted processing, another processing manner may be used, which may be specifically determined based on an actual situation. For example, processing similar to addition processing may be performed on representation values of the plurality of types of environment characteristics, and the second pass-through cost component may be further obtained through calculation. Alternatively, addition processing is performed on a plurality of second pass-through cost components corresponding to a plurality of task types, and a sum value is used as a pass-through cost corresponding to the whole of the plurality of task types.

It should be understood that in this embodiment of the present invention, when a second pass-through cost component of the whole of the plurality of task types in an area is calculated, the used at least one type of available environment characteristic of each task type may be all available environment characteristics of a corresponding task type in the area, or may be some available environment characteristics of a corresponding task type in the area, for example, at least one type of environment characteristic with an optimal representation value.

Optionally, the first area may be any area included in the environment map, or may be an area that meets the following condition: the representation value of the available environment characteristic of each of the plurality of task types in each first area meets an environment characteristic requirement of each task type.

Optionally, at least one third area is determined, and a representation value of an environment characteristic corresponding to at least one of the plurality of task types in the third area does not meet a representation value requirement of the at least one task type; and when path planning is performed, the third area is considered as an obstacle.

Optionally, each of the at least one third area is set as an obstacle on the environment map for the plurality of task types.

It should be understood that when the environment map is generated, the foregoing manner A and manner B may be combined for use.

For example, tasks to be executed by using the environment map include a task 1, a task 2, and a task 3, pass-through costs are respectively calculated for the task 1, the task 2, and the task 3, and a total pass-through cost of the task 1, the task 2, and the task 3 is calculated; or a pass-through cost of the task 1 is calculated, and a total pass-through cost of the task 2 and the task 3 is calculated.

It should be understood that in this embodiment of the present invention, classification of "types" of environment characteristics may indicate differences of environment characteristics, for example, a visual signal and a sound signal are considered as different types of environment characteristics; or may indicate different sources of a same type of environment characteristic, for example, light emitted from the sun and light emitted from a lamp in visual signals. A distinguishing dimension of "type" may be determined based on a specific actual situation.

Similarly, classification of "types" of tasks may also be determined based on a specific situation, for example, agricultural use and industrial use are different task types, and for example, positioning and communication are different task types.

220. Obtain a start location and a target location.

230. Perform path planning based on the pass-through cost for passing through each first area, to determine a pass-through path from the start location to the target location, where the pass-through path includes an area passed through from the start location to the target location.

Optionally, in this embodiment of the present invention, the path from the start location to the target location may be determined by using the environment map.

When path planning is performed by using the environment map, a plurality of algorithms may be used, for example, a Dijksra algorithm, an A* algorithm, and the like.

For ease of understanding, the following describes how to implement path planning with reference to the A* searching algorithm.

In the A* algorithm, the following formula 1 is required:

$$F(n) = G(n) + H(n) \qquad \text{formula 1}$$

F(n) is an estimated pass-through cost for passing through an start node, an intermediate node n, and then a target node; G(n) is an actually obtained pass-through cost for passing through the start node to the intermediate node n; and H(n) is an estimated pass-through cost of an optimal path from the intermediate node n to the target node.

H(n) may be calculated by using a Manhattan algorithm or another algorithm, and is not specifically limited herein.

A key to find out the optimal path lies in selection of an evaluation function F(n). For clear understanding of the algorithm, the following specifically describes an execution manner of the algorithm.

Step 1: Add the start node to an enabled list.

Step 2: Repeat the following operations:

a. Find a node with a lowest value of F in the enabled list, namely, a current node.
b. Switch the current node to a disabled list.
c. Perform the following operations on each adjacent node of the current node:

(1) If the adjacent node cannot be passed through or is in the disabled list, ignore the node.
(2) If the adjacent node is not in the enabled list, add the adjacent node to the enabled list, use the current node as a traceback node of the node, and record values of F, G, and H of the node.
(3) If the adjacent node is already in the enabled list, use a value of G as a reference to check whether a new path is better; and if the new path is better, use a traceback node of the adjacent node as the current node, and re-calculate values of G and F of the node.

d. Stop the process in the following two cases:

(1) The target node is added to the disabled list, and in this case, the path has been found.
(2) No target path is found. In this case, the enabled list is empty, indicating that no path is found.

Step 3: Save a path. A path from the target node to the start node along a traceback node of each node is a selected path.

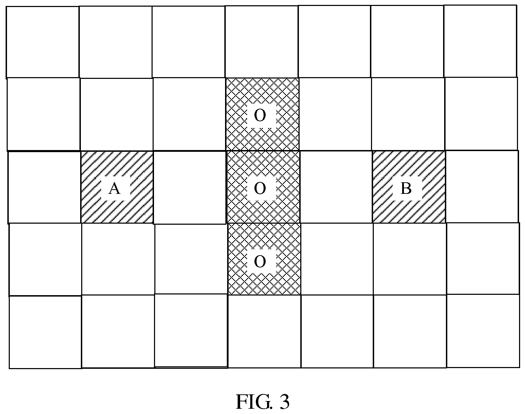

For clearer understanding of an implementation of the A* algorithm, the following is described with reference to FIG. 3 to FIG. 6.

FIG. 3 shows a location relationship between a start node, an obstacle, and a target node.

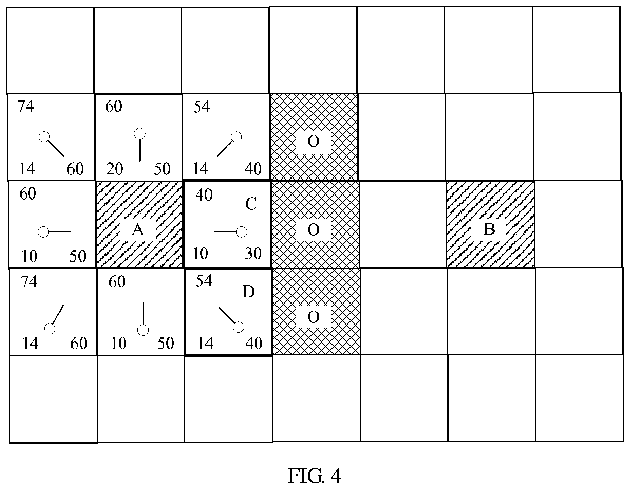

As shown in FIG. 4, FIG. 5, and FIG. 6, a path is calculated based on only a pass-through cost corresponding to a pass-through distance of a node. It is assumed that side-length distances of nodes are consistent, diagonal distances of the nodes are consistent, a pass-through cost corresponding to a side-length distance of each node may be denoted as 10, and a pass-through cost corresponding to a diagonal distance of each node may be denoted as 14.

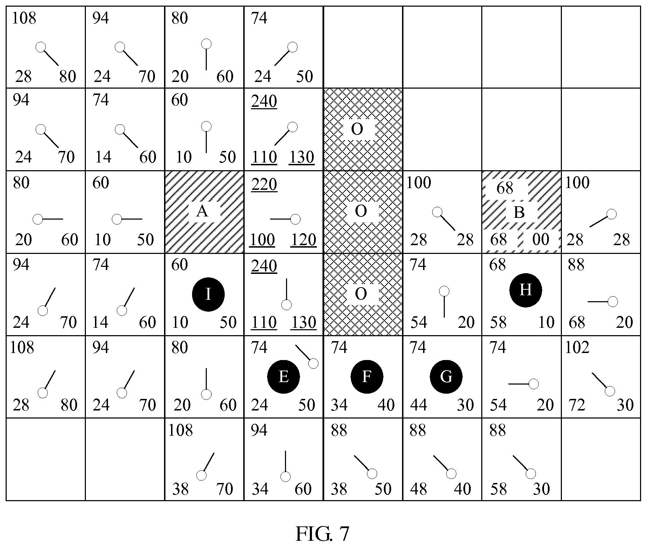

As shown in FIG. 7, a path is calculated based on a pass-through cost corresponding to a pass-through distance of a node and a representation value of an environment characteristic.

As shown in FIG. 4 to FIG. 7, a value of G is shown in a lower left part, a value of H is shown in a lower right part, a value of F is shown in an upper left part, and

↘◯ indicates a traceback node of a current node.

As shown in FIG. 3, a node A is a start node, a node B is a target node, and three nodes O between the node A and the node B are obstacles, namely, nodes that cannot be passed through.

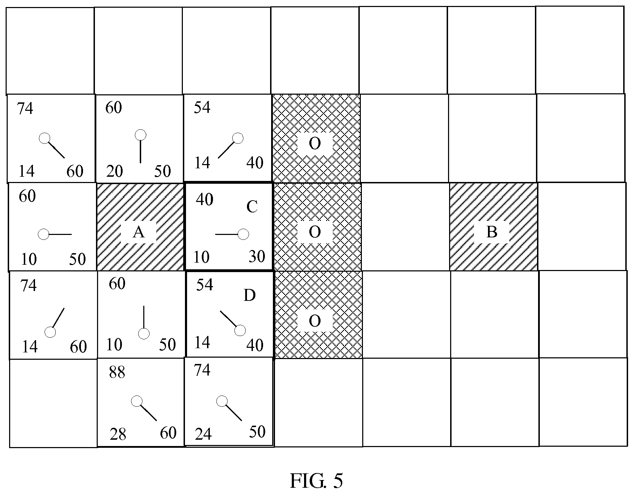

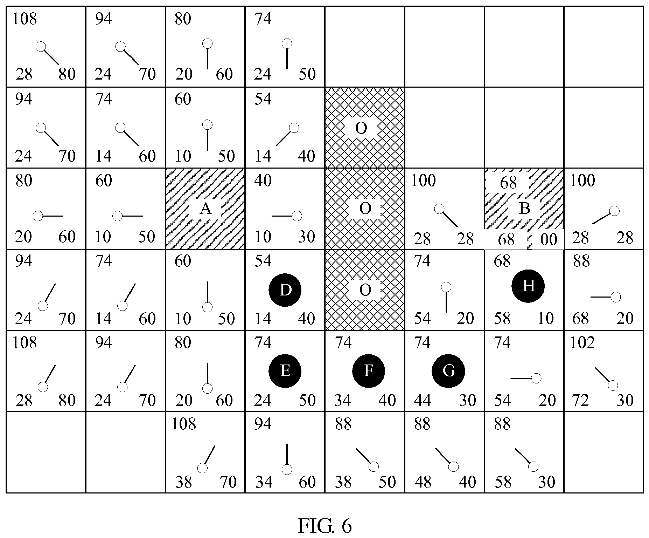

As shown in FIG. 4, after the start node is switched to the disabled list, the enabled list is searched for a node with a lowest value of F, namely, a node C immediately adjacent to a right side of the start node A. The node C is added to the disabled list, and then a node adjacent to the node C is checked. Because a left node of the node C is the start node, and a right node of the node C is an obstacle, the two nodes can be ignored. Another two adjacent nodes of the node are added to the enabled list, and then a value of G is used as a reference to check in the enabled list whether a new path is better. It is found that nodes above and beneath the node C are directly connected to the start node, and a path is better. Because values of F of the nodes above and beneath the node C are consistent, a node last added to the list may be selected, or a node may be randomly selected. For example, as shown in FIG. 5, a node D is selected. Selection continues until an optimal path is found. A finally obtained path may be shown in FIG. 6, and nodes that need to be passed through from the start node A to an end node B include a node D, a node E, a node F, a node G, and a node H.

FIG. 7 shows an optimal path that is from the start node A to the end node B and that is obtained with reference to a representation value of an environment characteristic and a pass-through distance of an area. In an environment map shown in FIG. 7, pass-through costs of three nodes on a left side of an obstacle are changed to 100 and 140 (for example, the pass-through costs are changed due to a relatively poor light condition). It can be seen from the figure that traceback nodes of the upper and lower two nodes of the three nodes have changed. Based on the A* algorithm and an updated cost, nodes that need to be passed through in an optimal path from the node A to the node B include a node I, a node E, a node F, a node G, and a node H.

Therefore, it can be seen from FIG. 3 to FIG. 7 that a path finally planned by using an environment map obtained based on a representation value of an environment characteristic and a pass-through distance is different from a path finally planned by using an environment map obtained based on only a pass-through distance. Therefore, when path planning is performed by using the environment map generated based on the representation value of the environment characteristic and the pass-through distance, more factors may be considered, so that a planned path is better.

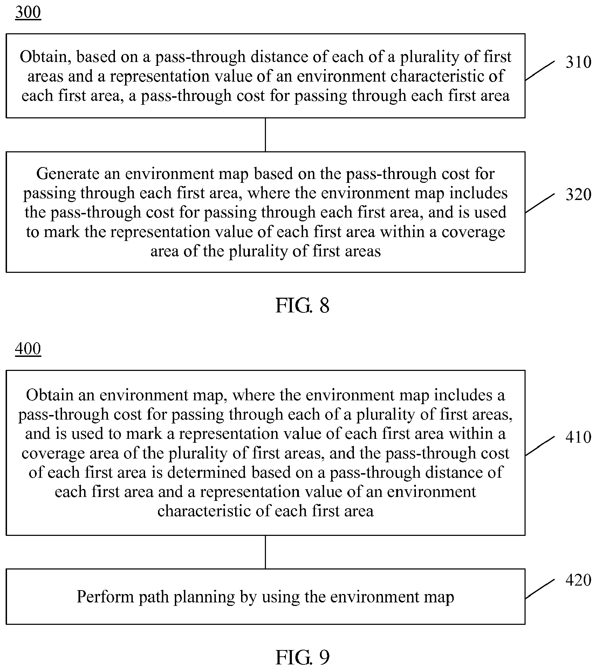

FIG. 8 is a schematic flowchart of a map generation method 300 according to an embodiment of the present invention. As shown in FIG. 8, the method 300 includes the following content.

310. Obtain, based on a pass-through distance of each of a plurality of first areas and a representation value of an environment characteristic of each first area, a pass-through cost for passing through each first area.

320. Generate an environment map based on the pass-through cost for passing through each first area, where the environment map includes the pass-through cost for passing through each first area, and is used to mark the representation value of each first area within a coverage area of the plurality of first areas.

Optionally, for a specific implementation of the map generation method shown in FIG. 8, refer to the description in the method 300. For brevity, details are not described herein again.

FIG. 9 is a schematic flowchart of a path planning method 400 according to an embodiment of the present invention. As shown in FIG. 9, the method 400 includes the following content.

410. Obtain an environment map, where the environment map includes a pass-through cost for passing through each of a plurality of first areas, and is used to mark a representation value of each first area within a coverage area of the plurality of first areas, and the pass-through cost of each first area is determined based on a pass-through distance of each first area and a representation value of an environment characteristic of each first area.

420. Perform path planning by using the environment map.

In an implementation, when a representation value of an environment characteristic at the current location does not meet a pass-through requirement, a location to which a robot is to move is selected from the plurality of locations based on the map.

Therefore, a robot does not actively move to an area whose representation value of an environment characteristic does not meet a pass-through requirement, so that stability of environment characteristic input is improved, and robustness of a corresponding function of the robot is improved. Further, when the robot finds that the representation value of the environment characteristic does not meet the pass-through requirement, the robot can actively move to, based on the map, an area whose representation value of the environment characteristic meets the pass-through requirement, so that robot use stability is improved, and user experience is improved.

In another implementation, a start location and a target location are obtained, and a path from the start location to the target location is determined by using the map.

Optionally, for a specific implementation of the path planning method shown in FIG. 9, refer to the description in the method 200. For brevity, details are not described herein again.

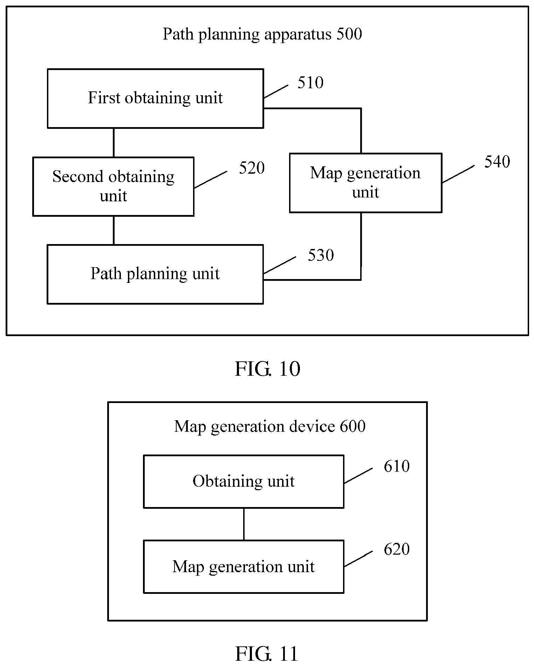

FIG. 10 is a schematic block diagram of a path planning apparatus 500 according to an embodiment of the present invention. As shown in FIG. 10, the path planning apparatus 500 includes: a first obtaining unit 510, configured to obtain, based on a pass-through distance of each of a plurality of first areas and a representation value of an environment characteristic of each first area, a pass-through cost for passing through each first area; a second obtaining unit 520, configured to obtain a start location and a target location; and a path planning unit 530, configured to perform path planning based on the pass-through cost for passing through each first area, to determine a pass-through path from the start location to the target location, where the pass-through path includes an area passed through from the start location to the target location.

Optionally, the apparatus 600 further includes a map generation unit 540, configured to: generate an environment map based on the pass-through cost for passing through each first area, where the environment map includes the pass-through cost for passing through each first area, and is used to mark the representation value of each first area within a coverage area of the plurality of first areas; and the path planning unit 530 is further configured to: based on the environment map, determine the pass-through path based on a pass-through cost for passing through each area within a coverage area of the plurality of areas.

Optionally, the first obtaining unit 510 is further configured to: determine, based on the pass-through distance of each first area, a first pass-through cost component corresponding to the pass-through distance of each first area; determine, based on the representation value of the environment characteristic of each first area, a second pass-through cost component corresponding to the representation value of the environment characteristic of each first area; and calculate, based on the first pass-through cost component and the second pass-through cost component of each first area, the pass-through cost for passing through each first area.

Optionally, the first obtaining unit 510 is further configured to: obtain at least one task type to be executed when the pass-through path is passed through; obtain, based on a representation value of at least one type of available environment characteristic of each of the at least one task type in each first area, a second pass-through cost component corresponding to each task type at each first area; and calculate, based on the first pass-through cost component of each first area and the second pass-through cost component corresponding to each task type in each first area, a pass-through cost for passing through each first area when each task type is executed; and the path planning unit 530 is further configured to determine, based on the pass-through cost for passing through each first area when each task type is executed, the pass-through path used for executing each task type.

Optionally, the at least one task type includes a first task type, and the first obtaining unit 510 is further configured to determine, based on a representation value of at least one type of environment characteristic whose representation value meets a predetermined condition and that is in an available environment characteristic of the first task type in each first area, a second pass-through cost component corresponding to the first task type in each first area.

Optionally, the first area is an area that meets the following condition: the representation value of an available environment characteristic of the first task type in the first area meets an environment characteristic requirement of the first task type.

Optionally, the first obtaining unit 510 is further configured to: determine at least one second area, where the representation value of the available environment characteristic of the first task type in the second area does not meet the environment characteristic requirement of the first task type; and the path planning unit 530 is further configured to: when performing path planning, consider each of the at least one second area as an obstacle.

Optionally, the first obtaining unit 510 is further configured to: obtain a plurality of task types to be executed when the pass-through path is passed through; obtain, based on a representation value of at least one type of available environment characteristic of each of the plurality of task types, a second pass-through cost component corresponding to a whole of the plurality of task types in each first area; and calculate, based on the first pass-through cost component of each first area and the second pass-through cost component corresponding to the whole of the plurality of task types in each first area, a pass-through cost corresponding to the whole of the plurality of task types in each first area; and the path planning unit 530 is further configured to determine, based on the pass-through cost corresponding to the whole of the plurality of task types in each first area, the pass-through path used for executing the plurality of task types.

Optionally, the first obtaining unit 510 is further configured to: obtain, based on a representation value of at least one type of available environment characteristic of each of the plurality of task types in each first area, a second pass-through cost component corresponding to each task type in each first area; and perform weighted processing on a plurality of second pass-through cost components corresponding to the plurality of task types in each first area, to obtain the second pass-through cost component corresponding to the whole of the plurality of task types in the first area.

Optionally, the first area is an area that meets the following condition: the representation value of the available environment characteristic of each of the plurality of task types in the first area meets an environment characteristic requirement of each task type.

Optionally, the first obtaining unit 510 is further configured to determine at least one third area, where a representation value of an environment characteristic corresponding to at least one of the plurality of task types in the third area does not meet a representation value requirement of the at least one task type; and the path planning unit 530 is further configured to: when performing path planning, consider each of the at least one third area as an obstacle.

Optionally, the first obtaining unit 510 is further configured to determine, based on a representation value of an environment characteristic of each area and a correspondence between a representation value interval of an environment characteristic and a pass-through cost component, the obtained second pass-through cost component in each first area.

Optionally, the first obtaining unit 510 is further configured to: obtain, in a statistical manner based on the pass-through distance of each first area and representation values that are of an environment characteristic of each first area and that are obtained at a plurality of times, the pass-through cost for passing through each first area; or obtain, in real time based on the pass-through distance of each first area and a real-time representation value of an environment characteristic of each first area, the pass-through cost for passing through each first area; or obtain, based on the pass-through distance of each first area and a predicted representation value of an environment characteristic of each first area, the pass-through cost for passing through each first area.

Optionally, the first obtaining unit 510 is further configured to: when a change rate of a representation value of an environment characteristic of each first area is less than or equal to a first threshold, obtain, in a statistical manner based on the pass-through distance of each first area and the representation values that are of the environment characteristic of each first area and that are obtained at a plurality of times, the pass-through cost for passing through each first area.

Optionally, the first obtaining unit 510 is further configured to: when a change rate of a representation value of an environment characteristic of each first area is greater than a second threshold, obtain, in real time based on the pass-through distance of each first area and the real-time representation value of the environment characteristic of each first area, the pass-through cost for passing through each first area.

Optionally, the environment characteristic includes a visual signal; and the first obtaining unit 510 is further configured to: obtain, based on a representation value of a visual signal that passes through each first area and that is in each of the plurality of directions, a second pass-through cost component corresponding to each direction at each first area; and determine, based on the first pass-through cost component of each first area and the second pass-through cost component corresponding to each direction in each first area, a pass-through cost for passing through each first area in each direction.

Optionally, the environment characteristic includes at least one of a visual signal, a sound signal, and a contact surface status.

Optionally, the environment characteristic includes a visual signal, and a representation value of the visual signal includes light intensity and/or a quantity of visible characteristics.

Optionally, the environment characteristic includes a sound signal, and a representation value of the sound signal includes strength of the sound signal.

Optionally, the environment characteristic includes a contact surface status, and a representation value of the contact surface status includes an inclination degree, a height change rate, and/or a friction degree of a contact surface of the location.

It should be understood that the path planning apparatus 500 may perform the method shown in FIG. 2. For brevity, details are not described herein again.

FIG. 11 is a schematic block diagram of a map generation device 600 according to an embodiment of the present invention. As shown in FIG. 11, the device 600 includes an obtaining unit 610 and a map generation unit 620. The obtaining unit 610 is configured to obtain, based on a pass-through distance of each of a plurality of first areas and a representation value of an environment characteristic of each first area, a pass-through cost for passing through each first area; and the map generation unit 620 is configured to generate an environment map based on the pass-through cost for passing through each first area, where the environment map includes the pass-through cost for passing through each first area, and is used to mark the representation value of each first area within a coverage area of the plurality of first areas.

It should be understood that, for a manner of obtaining the pass-through cost by the obtaining unit 610 and a manner of generating the map by the map generation unit 620, refer to the description of the foregoing method. For brevity, details are not described herein again.

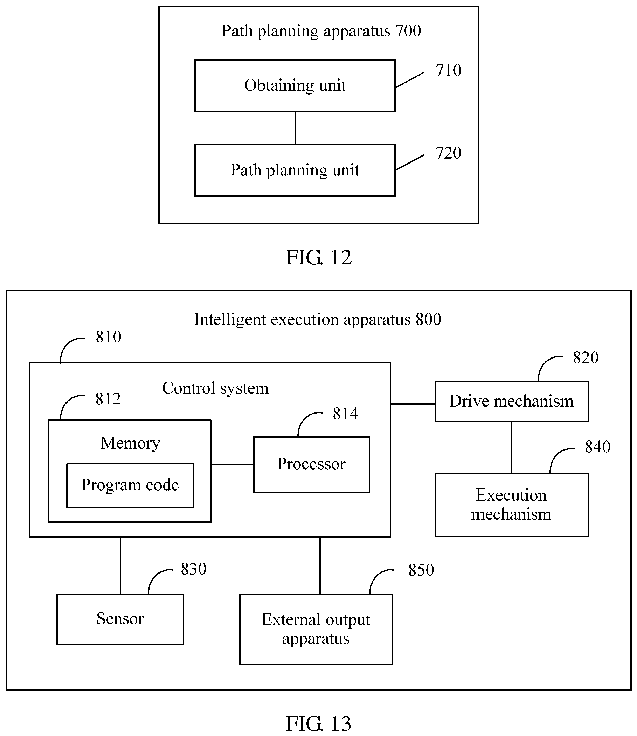

FIG. 12 is a schematic block diagram of a path planning apparatus 700 according to an embodiment of the present invention. As shown in FIG. 12, the apparatus 700 includes an obtaining unit 710 and a path planning unit 720. The obtaining unit 710 is configured to obtain an environment map, where the environment map includes a pass-through cost for passing through each first area, and is used to mark a representation value of each first area within a coverage area of the plurality of first areas, and the pass-through cost of each first area is determined based on a pass-through distance of each of the plurality of first areas and a representation value of an environment characteristic of each first area. The path planning unit 720 is configured to perform path planning by using the environment map.

It should be understood that, for a manner of obtaining the environment map by the obtaining unit 710 and a manner of performing path planning by the path planning unit 720, refer to the description of the foregoing method. For brevity, details are not described herein again.

FIG. 13 is a schematic block diagram of an intelligent execution apparatus 800 according to an embodiment of the present invention. The intelligent execution apparatus 800 may be a machining apparatus that automatically executes work, for example, may be a robot, a self-driving vehicle, or an unmanned aerial vehicle.

As shown in FIG. 13, the intelligent execution apparatus 800 may include a control system 810, a drive mechanism 820, a sensor 830, an execution mechanism 840, and an external output apparatus 850.

The control system 810 may send an instruction to the drive mechanism 820, and the drive mechanism 820 may drive the execution mechanism 840 to perform a corresponding action based on the instruction sent by the control system 810.

The control system 810 may externally output a signal by using the external output apparatus 850. Optionally, the external output apparatus 850 may include a display, a voice output apparatus, a wireless transmitter, or the like, where the display may display quantity of electricity, a planned path, or the like, the voice output apparatus may coordinate with a voice detection sensor, to implement a dialog with a user or the like, and the wireless transmitter may send a wireless signal or the like.

The sensor 830 may include an internal information sensor and an external information sensor. The internal information sensor may detect a working status of each part of the intelligent execution apparatus, for example, a location, a speed, acceleration, and the like of each joint included in the execution mechanism 840. The external information sensor may detect external information, for example, may obtain the representation value of the environment characteristic described in the embodiments of this application or the like, and may further obtain other information, for example, obtain a voice instruction that is input by the user, and receive a wireless signal.

The sensor 830 may provide the obtained information for the control system 810, and the control system 810 may send, based on the information provided by the sensor, an instruction to the drive mechanism 820, and/or externally output a signal by using the external output apparatus 850.

Optionally, the drive mechanism 820 may be a power driving apparatus, such as a stepper motor or a servo motor.

Optionally, the execution mechanism 840 is configured to perform a corresponding action based on a drive of the drive mechanism 820. The execution mechanism 840 may use a space open-chain linkage mechanism, where a revolute pair may be referred to as a joint, and a freedom degree of the intelligent execution apparatus may be determined by a quantity of joints. For example, the intelligent execution mechanism 800 is a robot, the execution mechanism may include a hand, a wrist, an arm, a walking part, and the like, and parts may be optionally connected to each other by using a joint.

Optionally, the control system 810 may include a processor 814 and a memory 812. The memory 812 may store program code, and the processor 814 may execute the program code stored in the memory 812.

The processor 814 communicates with the memory 812 by using an internal connection path.

Optionally, the processor 814 may invoke the program code stored in the memory 812, to perform the method shown in FIG. 2, FIG. 8, or FIG. 9. In addition, optionally, the processor 814 may invoke the program code stored in the memory 812, to send an instruction to the drive mechanism 820. In addition, optionally, the processor 814 may invoke the program code stored in the memory 812, to externally output a signal by using the external output apparatus 850.

It should be understood that the intelligent execution apparatus 800 shown in FIG. 13 is only an optional embodiment of this application. The intelligent execution apparatus in this embodiment of this application may further include another mechanism, for example, the intelligent execution apparatus 800 may not include the external output apparatus, or a wireless transceiver included in the external output apparatus and a receiver in the sensor may be integrated. It should be understood that the processor in this embodiment of the present invention may be an integrated circuit chip, and has a signal processing capability. The processor may be a general purpose processor, Digital Signal Processor (DSP), an Application-Specific Integrated Circuit (ASIC), a Field Programmable Gate Array (FPGA) or another programmable logical device, a discrete gate or transistor logic device, or a discrete hardware component. It may implement or perform the methods, the steps, and logical block diagrams that are disclosed in the embodiments of the present invention. The general purpose processor may be a microprocessor, or the processor may be any conventional processor or the like.

The memory in the embodiments of the present invention may be a volatile memory or a nonvolatile memory, or may include both a volatile memory and a nonvolatile memory. The nonvolatile memory may be a Read-Only Memory (ROM), a Programmable ROM (PROM), an erasable programmable read-only memory (EPROM), an electrically erasable programmable read-only memory (EEPROM), or a flash memory. The volatile memory may be a Random Access Memory (RAM), used as an external cache. Through example but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct Rambus dynamic random access memory (DR RAM). It should be noted that the memory of the systems and methods described in this specification includes but is not limited to these and any memory of another proper type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present invention, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.   A path planning method, comprising:

obtaining, based on a pass-through distance of each of a plurality of first areas and a representation value of an environment characteristic of each first area, a pass-through cost for passing through each first area;
obtaining a start location and a target location; and
performing path planning based on the pass-through cost for passing through each first area, to determine a pass-through path from the start location to the target location, wherein the pass-through path comprises an area passed through from the start location to the target location.

2.   The method according to claim 1, wherein the method further comprises:

generating an environment map based on the pass-through cost for passing through each first area, wherein the environment map comprises the pass-through cost for passing through each first area, and is used to mark the representation value of each first area; and
the performing path planning based on the pass-through cost for passing through each first area, to determine a pass-through path from the start location to the target location comprises:
based on the environment map, determining the pass-through path based on the pass-through cost for passing through each first area.

3.   The method according to claim 1 or 2, wherein the obtaining, based on a pass-through distance of each of a plurality of first areas and a representation value of an environment characteristic of each first area, a pass-through cost for passing through each first area comprises:

determining, based on the pass-through distance of each first area, a first pass-through cost component corresponding to the pass-through distance of each first area;

determining, based on the representation value of the environment characteristic of each first area, a second pass-through cost component corresponding to the representation value of the environment characteristic of each first area; and

calculating, based on the first pass-through cost component and the second pass-through cost component of each first area, the pass-through cost for passing through each first area.

4. The method according to claim 3, wherein the method further comprises:

obtaining at least one task type to be executed when the pass-through path is passed through; the determining, based on the representation value of the environment characteristic of each first area, a second pass-through cost component corresponding to the representation value of the environment characteristic of each first area comprises:

obtaining, based on a representation value of at least one type of available environment characteristic of each of the at least one task type in each first area, a second pass-through cost component corresponding to each task type at each first area; the calculating, based on the first pass-through cost component and the second pass-through cost component of each first area, the pass-through cost for passing through each first area comprises:

calculating, based on the first pass-through cost component of each first area and the second pass-through cost component corresponding to each task type in each first area, a pass-through cost for passing through each first area when each task type is executed; and the performing path planning based on the pass-through cost for passing through each first area comprises: determining, based on the pass-through cost for passing through each first area when each task type is executed, the pass-through path used for executing each task type.

5. The method according to claim 4, wherein the at least one task type comprises a first task type, and the obtaining the second pass-through cost component corresponding to each task type in each first area comprises:

determining, based on a representation value of at least one type of environment characteristic whose representation value meets a predetermined condition and that is in an available environment characteristic of the first task type in each first area, a second pass-through cost component corresponding to the first task type in each first area.

6. The method according to claim 5, wherein the first area is an area that meets the following condition: the representation value of the available environment characteristic of the first task type in the first area meets an environment characteristic requirement of the first task type.

7. The method according to claim 6, wherein the method further comprises:

determining at least one second area, wherein the representation value of the available environment characteristic of the first task type in the second area does not meet the environment characteristic requirement of the first task type; and when path planning is performed, considering each of the at least one second area as an obstacle.

8. The method according to claim 3, wherein the method further comprises:

obtaining a plurality of task types to be executed when the pass-through path is passed through; the obtaining, based on the representation value of the environment characteristic of each first area, a second pass-through cost component corresponding to the representation value of the environment characteristic of each first area comprises:

obtaining, based on a representation value of at least one type of available environment characteristic of each of the plurality of task types, a second pass-through cost component corresponding to a whole of the plurality of task types in each first area; the calculating, based on the first pass-through cost component and the second pass-through cost component of each first area, the pass-through cost for passing through each first area comprises:

calculating, based on the first pass-through cost component of each first area and the second pass-through cost component corresponding to the whole of the plurality of task types in each first area, a pass-through cost corresponding to the whole of the plurality of task types in each first area; and
the performing path planning based on the pass-through cost for passing through each first area comprises:
determining, based on the pass-through cost corresponding to the whole of the plurality of task types in each first area, the pass-through path used for executing the plurality of task types.

9. The method according to claim 8, wherein the obtaining a second pass-through cost component corresponding to a whole of the plurality of task types in each first area comprises:

   obtaining, based on a representation value of at least one type of available environment characteristic of each of the plurality of task types in each first area, a second pass-through cost component corresponding to each task type in each first area; and
   performing weighted processing on a plurality of second pass-through cost components corresponding to the plurality of task types in each first area, to obtain the second pass-through cost component corresponding to the whole of the plurality of task types in the first area.

10. The method according to claim 9, wherein the first area is an area that meets the following condition: the representation value of the available environment characteristic of each of the plurality of task types in the first area meets an environment characteristic requirement of each task type.

11. The method according to claim 10, wherein the method further comprises:

    determining at least one third area, wherein a representation value of an environment characteristic corresponding to at least one of the plurality of task types in the third area does not meet a representation value requirement of the at least one task type; and
    when path planning is performed, considering each of the at least one third area as an obstacle.

12. The method according to any one of claims 3 to 11, wherein the determining, based on the representation value of the environment characteristic of each first area, a second pass-through cost component corresponding to the representation value of the environment characteristic of each first area comprises:
    determining, based on a representation value of an environment characteristic of each area and a correspondence between a representation value interval of an environment characteristic and a pass-through cost component, the second pass-through cost component in each first area.

13. The method according to any one of claims 3 to 12, wherein the environment characteristic comprises a visual signal;
    the determining, based on the representation value of the environment characteristic of each first area, a second pass-through cost component corresponding to the representation value of the environment characteristic of each first area comprises:

    obtaining, based on a representation value of a visual signal that passes through each first area and that is in each of the plurality of directions, a second pass-through cost component corresponding to each direction at each first area; and
    the calculating, based on the first pass-through cost component and the second pass-through cost component of each first area, the pass-through cost for passing through each first area comprises:
    determining, based on the first pass-through cost component of each first area and the second pass-through cost component corresponding to each direction in each first area, a pass-through cost for passing through each first area in each direction.

14. The method according to any one of claims 1 to 13, wherein the obtaining, based on a pass-through distance of each of a plurality of first areas and a representation value of an environment characteristic of each first area, a pass-through cost for passing through each first area comprises:

    obtaining, in a statistical manner based on the pass-through distance of each first area and representation values that are of an environment characteristic of each first area and that are obtained at a plurality of times, the pass-through cost for passing through each first area; or
    obtaining, in real time based on the pass-through distance of each first area and a real-time representation value of an environment characteristic of each first area, the pass-through cost for passing through each first area; or
    obtaining, based on the pass-through distance of each first area and a predicted representation value of an environment characteristic of each first area, the pass-through cost for passing through each first area.

15. The method according to claim 14, wherein the obtaining, in a statistical manner based on the pass-through distance of each first area and representation values that are of an environment characteristic of each first area and that are obtained at a plurality of times, the pass-through cost for passing through each first area comprises:

when a change rate of a representation value of an environment characteristic of each first area is less than or equal to a first threshold, obtaining, in a statistical manner based on the pass-through distance of each first area and the representation values that are of the environment characteristic of each first area and that are obtained at a plurality of times, the pass-through cost for passing through each first area.

16. The method according to claim 14, wherein the obtaining, in real time based on the pass-through distance of each first area and a real-time representation value of an environment characteristic of each first area, the pass-through cost for passing through each first area comprises:

when a change rate of a representation value of an environment characteristic of each first area is greater than a second threshold, obtaining, in real time based on the pass-through distance of each first area and the real-time representation value of the environment characteristic of each first area, the pass-through cost for passing through each first area.

17. A path planning apparatus, comprising:

a first obtaining unit, configured to obtain, based on a pass-through distance of each of a plurality of first areas and a representation value of an environment characteristic of each first area, a pass-through cost for passing through each first area;

a second obtaining unit, configured to obtain a start location and a target location; and

a path planning unit, configured to perform path planning based on the pass-through cost for passing through each first area, to determine a pass-through path from the start location to the target location, wherein the pass-through path comprises an area passed through from the start location to the target location.

18. The apparatus according to claim 17, wherein the apparatus further comprises a map generation unit, configured to:

generate an environment map based on the pass-through cost for passing through each first area, wherein the environment map comprises the pass-through cost for passing through each first area, and is used to mark the representation value of each first area; and

the path planning unit is further configured to: based on the environment map, determine the pass-through path based on the pass-through cost for passing through each first area.

19. The apparatus according to claim 17 or 18, wherein the first obtaining unit is further configured to:

determine, based on the pass-through distance of each first area, a first pass-through cost component corresponding to the pass-through distance of each first area;

determine, based on the representation value of the environment characteristic of each first area, a second pass-through cost component corresponding to the representation value of the environment characteristic of each first area; and

calculate, based on the first pass-through cost component and the second pass-through cost component of each first area, the pass-through cost for passing through each first area.

20. The apparatus according to claim 19, wherein the first obtaining unit is further configured to:

obtain at least one task type to be executed when the pass-through path is passed through;

obtain, based on a representation value of at least one type of available environment characteristic of each of the at least one task type in each first area, a second pass-through cost component corresponding to each task type at each first area; and

calculate, based on the first pass-through cost component of each first area and the second pass-through cost component corresponding to each task type in each first area, a pass-through cost for passing through each first area when each task type is executed; and

the path planning unit is further configured to: determine, based on the pass-through cost for passing through each first area when each task type is executed, the pass-through path used for executing each task type.

21. The apparatus according to claim 20, wherein the at least one task type comprises a first task type, and the first obtaining unit is further configured to: determine, based on a representation value of at least one type of environment characteristic whose representation value meets a predetermined condition and that is in an available environment characteristic of the first task type in each first area, a second pass-through cost component corresponding to the first task type in each first area.

22. The apparatus according to claim 21, wherein the first area is an area that meets the following condition: the representation value of the available environment characteristic of the first task type in the first area meets an environment characteristic requirement of the first task type.

23. The apparatus according to claim 22, wherein the first obtaining unit is further configured to:

   determine at least one second area, wherein the representation value of the available environment characteristic of the first task type in the second area does not meet the environment characteristic requirement of the first task type; and
   the path planning unit is further configured to: when performing path planning, consider each of the at least one second area as an obstacle.

24. The apparatus according to claim 19, wherein the first obtaining unit is further configured to:

   obtain a plurality of task types to be executed when the pass-through path is passed through; obtain, based on a representation value of at least one type of available environment characteristic of each of the plurality of task types, a second pass-through cost component corresponding to a whole of the plurality of task types in each first area; and
   calculate, based on the first pass-through cost component of each first area and the second pass-through cost component corresponding to the whole of the plurality of task types in each first area, a pass-through cost corresponding to the whole of the plurality of task types in each first area; and
   the path planning unit is further configured to: determine, based on the pass-through cost corresponding to the whole of the plurality of task types in each first area, the pass-through path used for executing the plurality of task types.

25. The apparatus according to claim 24, wherein the first obtaining unit is further configured to:

   obtain, based on a representation value of at least one type of available environment characteristic of each of the plurality of task types in each first area, a second pass-through cost component corresponding to each task type in each first area; and
   perform weighted processing on a plurality of second pass-through cost components corresponding to the plurality of task types in each first area, to obtain the second pass-through cost component corresponding to the whole of the plurality of task types in the first area.

26. The apparatus according to claim 25, wherein the first area is an area that meets the following condition: the representation value of the available environment characteristic of each of the plurality of task types in the first area meets an environment characteristic requirement of each task type.

27. The apparatus according to claim 26, wherein the first obtaining unit is further configured to:

   determine at least one third area, wherein a representation value of an environment characteristic corresponding to at least one of the plurality of task types in the third area does not meet a representation value requirement of the at least one task type; and
   the path planning unit is further configured to: when performing path planning, consider each of the at least one third area as an obstacle.

28. The apparatus according to any one of claims 19 to 27, wherein the first obtaining unit is further configured to:
   determine, based on a representation value of an environment characteristic of each area and a correspondence between a representation value interval of an environment characteristic and a pass-through cost component, the obtained second pass-through cost component in each first area.

29. The apparatus according to any one of claims 19 to 28, wherein the environment characteristic comprises a visual signal; and
   the first obtaining unit is further configured to:

   obtain, based on a representation value of a visual signal that passes through each first area and that is in each of the plurality of directions, a second pass-through cost component corresponding to each direction at each first area; and
   determine, based on the first pass-through cost component of each first area and the second pass-through cost component corresponding to each direction in each first area, a pass-through cost for passing through each first area in each direction.

30. The apparatus according to any one of claims 17 to 29, wherein the first obtaining unit is further configured to:

   obtain, in a statistical manner based on the pass-through distance of each first area and representation values that are of an environment characteristic of each first area and that are obtained at a plurality of times, the pass-through cost for passing through each first area; or
   obtain, in real time based on the pass-through distance of each first area and a real-time representation value of an environment characteristic of each first area, the pass-through cost for passing through each first area; or

obtain, based on the pass-through distance of each first area and a predicted representation value of an environment characteristic of each first area, the pass-through cost for passing through each first area.

31. The apparatus according to claim 30, wherein the first obtaining unit is further configured to:

when a change rate of a representation value of an environment characteristic of each first area is less than or equal to a first threshold, obtain, in a statistical manner based on the pass-through distance of each first area and the representation values that are of the environment characteristic of each first area and that are obtained at a plurality of times, the pass-through cost for passing through each first area.

32. The apparatus according to claim 30, wherein the first obtaining unit is further configured to:

when a change rate of a representation value of an environment characteristic of each first area is greater than a second threshold, obtain, in real time based on the pass-through distance of each first area and the real-time representation value of the environment characteristic of each first area, the pass-through cost for passing through each first area.

110

120

130

FIG. 1

200

| Obtain, based on a pass-through distance of each of a plurality of first areas and a representation value of an environment characteristic of each first area, a pass-through cost for passing through each first area | 210 |

| Obtain a start location and a target location | 220 |

| Perform path planning based on the pass-through cost for passing through each first area, to determine a pass-through path from the start location to the target location, where the pass-through path includes an area passed through from the start location to the target location | 220 |

FIG. 2

FIG. 3

FIG. 4

FIG. 5

| | | | | | | | |
|---|---|---|---|---|---|---|---|
| 108<br>28　80 | 94<br>24　70 | 80<br>20　60 | 74<br>24　50 | | | | |
| 94<br>24　70 | 74<br>14　60 | 60<br>10　50 | 54<br>14　40 | O | | | |
| 80<br>20　60 | 60<br>10　50 | A | 40<br>10　30 | O | 100<br>28　28 | 68　B<br>68　00 | 100<br>28　28 |
| 94<br>24　70 | 74<br>14　60 | 60<br>10　50 | 54<br>D<br>14　40 | O | 74<br>54　20 | 68<br>H<br>58　10 | 88<br>68　20 |
| 108<br>28　80 | 94<br>24　70 | 80<br>20　60 | 74<br>E<br>24　50 | 74<br>F<br>34　40 | 74<br>G<br>44　30 | 74<br>54　20 | 102<br>72　30 |
| | | 108<br>38　70 | 94<br>34　60 | 88<br>38　50 | 88<br>48　40 | 88<br>58　30 | |

FIG. 6

| | | | | | | | |
|---|---|---|---|---|---|---|---|
| 108<br>28 · 80 | 94<br>24 · 70 | 80<br>20 · 60 | 74<br>24 · 50 | | | | |
| 94<br>24 · 70 | 74<br>14 · 60 | 60<br>10 · 50 | <u>240</u><br><u>110</u> <u>130</u> | O | | | |
| 80<br>20 · 60 | 60<br>10 · 50 | A | <u>220</u><br><u>100</u> <u>120</u> | O | 100<br>28 · 28 | 68 B<br>68 · 00 | 100<br>28 · 28 |
| 94<br>24 · 70 | 74<br>14 · 60 | 60 I<br>10 · 50 | <u>240</u><br><u>110</u> <u>130</u> | O | 74<br>54 · 20 | 68 H<br>58 · 10 | 88<br>68 · 20 |
| 108<br>28 · 80 | 94<br>24 · 70 | 80<br>20 · 60 | 74 E<br>24 · 50 | 74 F<br>34 · 40 | 74 G<br>44 · 30 | 74<br>54 · 20 | 102<br>72 · 30 |
| | | 108<br>38 · 70 | 94<br>34 · 60 | 88<br>38 · 50 | 88<br>48 · 40 | 88<br>58 · 30 | |

FIG. 7

300

| Obtain, based on a pass-through distance of each of a plurality of first areas and a representation value of an environment characteristic of each first area, a pass-through cost for passing through each first area | 310 |
|---|---|

| Generate an environment map based on the pass-through cost for passing through each first area, where the environment map includes the pass-through cost for passing through each first area, and is used to mark the representation value of each first area within a coverage area of the plurality of first areas | 320 |

FIG. 8

400

| Obtain an environment map, where the environment map includes a pass-through cost for passing through each of a plurality of first areas, and is used to mark a representation value of each first area within a coverage area of the plurality of first areas, and the pass-through cost of each first area is determined based on a pass-through distance of each first area and a representation value of an environment characteristic of each first area | 410 |

| Perform path planning by using the environment map | 420 |

FIG. 9

Path planning apparatus 500

First obtaining unit — 510

Second obtaining unit — 520

Map generation unit — 540

Path planning unit — 530

**FIG. 10**

Map generation device 600

Obtaining unit — 610

Map generation unit — 620

**FIG. 11**

Path planning apparatus 700

Obtaining unit — 710

Path planning unit — 720

FIG. 12

Intelligent execution apparatus 800

— 810

Control system

— 812

Memory

Program code

— 814

Processor

— 820

Drive mechanism

— 840

Execution mechanism

— 830

Sensor

— 850

External output apparatus

FIG. 13

# INTERNATIONAL SEARCH REPORT

| International application No. |
| --- |
| PCT/CN2018/073114 |

## A.  CLASSIFICATION OF SUBJECT MATTER

G01C 21/34 (2006.01) i; G01C 21/36 (2006.01) i

According to International Patent Classification (IPC) or to both national classification and IPC

## B.  FIELDS SEARCHED

Minimum documentation searched (classification system followed by classification symbols)

G01C; G05D

Documentation searched other than minimum documentation to the extent that such documents are included in the fields searched

Electronic data base consulted during the international search (name of data base and, where practicable, search terms used)

CNPAT, CNKI, WPI, EPODOC: 路径, 规划, 区域, 距离, 环境, 特征, 表征, 通行, 代价, 起始, 目标, 位置, 分量, 任务, 类型, 障碍, route, way, path, plan+, area, zone, distance, condition, surroundings, circumstance, environment, character, feature, pass, cost, start+, target, position, location, component, mission, task, type, obstacle

## C.  DOCUMENTS CONSIDERED TO BE RELEVANT

| Category* | Citation of document, with indication, where appropriate, of the relevant passages | Relevant to claim No. |
| --- | --- | --- |
| X | CN 104897168 A (TSINGHUA UNIVERSITY) 09 September 2015 (09.09.2015), description, pages 2-4 | 1-3, 12-19, 28-32 |
| A | CN 103576686 A (UNIVERSITY OF SCIENCE AND TECHNOLOGY OF CHINA) 12 February 2014 (12.02.2014) entire document | 1-32 |
| A | CN 104165625 A (BEIJING BAIDU NETCOM SCIENCE AND TECHNOLOGY CO., LTD.) 26 November 2014 (26.11.2014), entire document | 1-32 |
| A | CN 104615138 A (SHANGHAI VIEW TECHNOLOGIES CO., LTD.) 13 May 2015 (13.05.2015), entire document | 1-32 |
| A | US 2016123751 A1 (SAAB AB) 05 May 2016 (05.05.2016), entire document | 1-32 |

☒  Further documents are listed in the continuation of Box C.          ☒  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 March 2018 | 27 March 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHANG, Qi Telephone No. (86-10) 53961607 |
| --- | --- |

Form PCT/ISA /210 (second sheet) (July 2009)

## INTERNATIONAL SEARCH REPORT

| International application No. |
| --- |
| PCT/CN2018/073114 |

C (Continuation).       DOCUMENTS CONSIDERED TO BE RELEVANT

| Category* | Citation of document, with indication, where appropriate, of the relevant passages | Relevant to claim No. |
| --- | --- | --- |
| A | US 2016161258 A1 (SIKORSKY AIRCRAFT CORPORATION) 09 June 2016 (09.06.2016), entire document | 1-32 |

Form PCT/ISA /210 (continuation of second sheet) (July 2009)

EP 3 564 624 A1

## INTERNATIONAL SEARCH REPORT
### Information on patent family members

| | International application No. |
|---|---|
| | PCT/CN2018/073114 |

| Patent Documents referred in the Report | Publication Date | Patent Family | Publication Date |
|---|---|---|---|
| CN 104897168 A | 09 September 2015 | None | |
| CN 103576686 A | 12 February 2014 | None | |
| CN 104165625 A | 26 November 2014 | None | |
| CN 104615138 A | 13 May 2015 | None | |
| US 2016123751 A1 | 05 May 2016 | WO 2013070123 A1 | 16 May 2013 |
| | | US 2014249744 A1 | 04 September 2014 |
| | | EP 2776787 A1 | 17 September 2014 |
| US 2016161258 A1 | 09 June 2016 | EP 3032368 A1 | 15 June 2016 |

Form PCT/ISA /210 (patent family annex) (July 2009)

**EP 3 564 624 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710034754